# FASCICULE DE BREVET EUROPEEN

(11) **EP 0 516 573 B1**
(45) Date de publication et mention de la délivrance du brevet: **04.09.1996**
(21) Numéro de dépôt: 92440065.8
(22) Date de dépôt: 29.05.1992
(51) Int. Cl.: G01G 17/06, B01F 15/02, B01L 11/00, G01F 11/12

(54) **Dispositif à pompe péristaltique permettant de prélever, peser et mélanger automatiquement des liquides**
Vorrichtung mit einer peristaltischen Pumpe zum automatischen Entnehmen, Wiegen und Mischen von Flüssigkeiten
Peristaltic pump device for automatically sampling, weighing and mixing various liquids

(30) Priorité: 31.05.1991 FR 9106705
(43) Date de publication de la demande: 02.12.1992
(73) Titulaire: SOLIGNAC INDUSTRIES, F-34006 Montpellier Cédex (FR)
(72) Inventeur: Vilbert, Bernard, F-34280 Carnon (FR)
(74) Mandataire: Dénoyez, Hubert

(56) Documents cités:
- EP-A- 0 173 846
- FR-A- 2 665 092
- GB-A- 2 133 775
- GB-A- 2 151 800
- US-A- 4 552 516

## Description

La présente invention a pour objet un dispositif destiné à prélever, peser et mélanger automatiquement, suivant les données fournies par exemple par un ordinateur, des liquides divers et précieux, dans des conditions de non-contamination très strictes et de dosage pondéral précis.

Dans le domaine de la parfumerie et de la cosmétologie, ainsi que dans ceux de la pharmacie classique et de l'homéopathie, qui requièrent des dosages extrêmement précis, les opérations de mélange et de pesage sont le plus souvent effectuées manuellement dans les laboratoires, selon une certaine tradition mais en utilisant des balances électroniques de précision, qui ne permettent toutefois pas d'éliminer les risques d'erreurs, tant de dosage que de manipulation des liquides.

Pour pallier cet inconvénient, le document US-A-3 994 687 propose, en vue de réaliser la dilution géométrique d'un liquide, l'utilisation d'une pompe péristaltique comprenant une pluralité de tuyaux parallèles passant sous un rotor équipé de rouleaux de pression, l'une des extrémités de chacun desdits tuyaux étant immergée dans un réservoir du liquide diluant tandis que l'autre extrémité est reliée à un tube vertical monté sur un support mobile et débouchant au-dessus d'un flacon récepteur.

Toutefois le dispositif décrit dans ce document, conçu pour effectuer la dilution géométrique d'un même liquide dans plusieurs récipients à l'aide d'un même diluant, ne peut convenir à la réalisation d'un mélange de plusieurs liquides, en nombre variable.

Le document WO-A-91/08451, au nom de la Demanderesse (ayant une date de dépôt antérieure, mais publié après la date de dépôt de la présente invention), remédie à cette carence en proposant un dispositif qui permet d'éviter les erreurs de dosage ainsi que les risques inhérents à la manipulation de produits très coûteux et parfois corrosifs, en garantissant d'une part une économie optimale de ces produits par une plus grande sûreté et une plus grande précision de manipulation, d'autre part une grande rapidité d'exécution, ainsi qu'une meilleure sécurité sanitaire du personnel, dont le contact avec des vapeurs, notamment éthyliques, se trouve réduit.

Le dispositif décrit dans ce document comporte des éléments modulaires juxtaposables en fonction de la demande, chaque élément ou module comportant une multiplicité de blocs de pompage ou de transvasement, solidaires chacun d'un flacon ou autre récipient contenant la matière à transvaser dans un flacon récepteur.

Dans ce dispositif chaque bloc de pompage comprend une pompe péristaltique n'incorporant ni moteur ni rotor, ces derniers étant montés ensemble et solidaires d'un bras de robot mobile comportant un moyen de maintien du flacon récepteur tandis que le corps de la pompe péristaltique incorpore un tuyau à écrasement et est ouvert d'une part sur l'avant, afin de permettre l'introduction du rotor porte-galets entraîné par le moteur, et d'autre part sur l'arrière, pour permettre le remplacement du tuyau.

Un tel dispositif constitue un ensemble simple d'entretien et d'utilisation par du personnel non qualifié et permet en outre une économie non négligeable en produits et en moyens de câblage, puisqu'un seul moteur équipé d'un rotor porte-galets suffit pour autant de corps de pompes que nécessaire, théoriquement sans limitation de nombre.

En fonctionnement, en effet, l'ensemble formé par le moteur et le rotor porte-galets vient se positionner en face du corps de pompe désigné par le programme de prélèvement et de mélange, s'y accouple et tourne dans le sens du débit du liquide jusqu'à l'obtention du poids désiré, s'arrête alors puis tourne en sens inverse sur un tour ou deux, afin de réintroduire dans le récipient initial le liquide contenu dans le tuyau et le soustraire ainsi à l'action oxydante de l'air. A la fin de cette opération, l'ensemble se désaccouple et se positionne devant un autre corps de pompe selon la suite du programme établi, tandis qu'un dispositif de type connu pince alors le tuyau de manière à empêcher l'entrée de l'air et un écoulement intempestif du produit.

La présente invention a pour but de proposer un perfectionnement du dispositif qui fait l'objet du document WO-A-91/08451.

Le dispositif selon l'invention comprend, de la même manière que le dispositif décrit dans ce document, des éléments modulaires juxtaposables en fonction de la demande, chaque élément ou module comportant une multiplicité de blocs de pompage ou de transvasement incorporant un tuyau à écrasement et solidaires chacun d'un flacon ou autre récipient contenant le produit liquide à transvaser dans un flacon récepteur.

Le dispositif selon l'invention comprend également une pompe péristaltique en deux parties, la première constituée d'un corps de pompe destiné à accueillir un tuyau à écrasement, et la seconde constituée d'un rotor entraîné par un moteur solidaire d'un ensemble mobile comportant un système de maintien du flacon récepteur, et il se caractérise essentiellement en ce que chaque bloc de pompage est ouvert sur le dessus pour permettre l'introduction du rotor entraîné par le moteur.

Conformément à l'invention, le rotor mis en oeuvre comporte de trois à six galets cylindriques ou cylindriques à gorge, l'un ou l'autre type de galets pouvant être utilisé selon l'aptitude du tuyau à se vriller ou à s'échapper.

Selon un premier mode de réalisation du dispositif selon l'invention, le corps de la pompe péristaltique est solidaire du bloc de pompage, lequel est en outre ouvert sur les côtés pour permettre le remplacement aisé du tuyau.

Dans ce cas, le corps de pompe est avantageusement formé de deux parties réunies de façon élastique, afin de permettre son adaptation à des tuyaux de diamètres différents, ces diamètres se situant généralement entre 3 et 6 millimètres.

En fonctionnement, l'ensemble constitué par le moteur et le rotor porte-galets vient se positionner sur le bloc de pompage désigné par le programme de prélèvement et de mélange, s'y accouple, tourne dans le sens du débit du liquide jusqu'à l'obtention du poids désiré, s'arrête puis tourne en sens inverse sur un tour ou deux, afin de réintroduire dans le récipient initial le liquide contenu dans le tuyau et le soustraire ainsi à l'action oxydante de l'air. A la fin de cette opération, l'ensemble se désaccouple et se positionne sur un autre bloc de pompage selon la suite du programme établi.

Selon un second mode de réalisation du dispositif selon l'invention, le corps de la pompe péristaltique est solidaire de l'ensemble mobile, et le bloc de pompage est ouvert par le dessous pour permettre l'introduction dudit corps de pompe.

Ce second mode de réalisation offre l'avantage de ne nécessiter la mise en oeuvre que d'un corps de pompe et d'un rotor pour une multiplicité de blocs de pompage.

Le fonctionnement est le même que celui du mode de réalisation précédent, à ceci près que l'ensemble formé par le moteur et le rotor porte-galets se déplace en même temps que le corps de pompe, qui vient se placer sous le tuyau à écrasement du bloc de pompage tandis que le rotor se place au-dessus.

En l'absence du rotor porte-galets un dispositif pince le tuyau de manière à empêcher un écoulement intempestif du produit et l'entrée de l'air.

Le dispositif selon l'invention est complété par un dispositif de pesée simultanée de type classique, avantageusement relié à l'ordinateur qui commande le fonctionnement automatique de l'ensemble selon le programme choisi.

La présente invention sera mieux comprise à la lecture de la description qui suit et qui se rapporte au dessin annexé, lequel en représente un mode de réalisation non limitatif.

Dans le dessin annexe :
- la figure 1 représente un premier mode de réalisation du dispositif selon l'invention, avec son rotor porte-galets en position désaccouplée.
- la figure 2 représente le corps de pompe du dispositif de la figure 1, vu de face.
- la figure 3 représente le même corps de pompe, vu en coupe, selon la ligne de coupe AA de la figure 2, en position désaccouplée avec le rotor.
- la figure 4 représente le même corps de pompe vu en coupe, en position d'accouplement avec le rotor.
- la figure 5 représente un second mode de réalisation du dispositif selon l'invention.
- la figure 6 représente le corps de pompe du dispositif de la figure 5, vu de face.
- la figure 7 représente le même coprs de pompe, vu en coupe, en position désacccouplée avec le rotor.
- la figure 8 représentre le même corps de pompe, vu en coupe, en position d'accouplement avec le rotor.

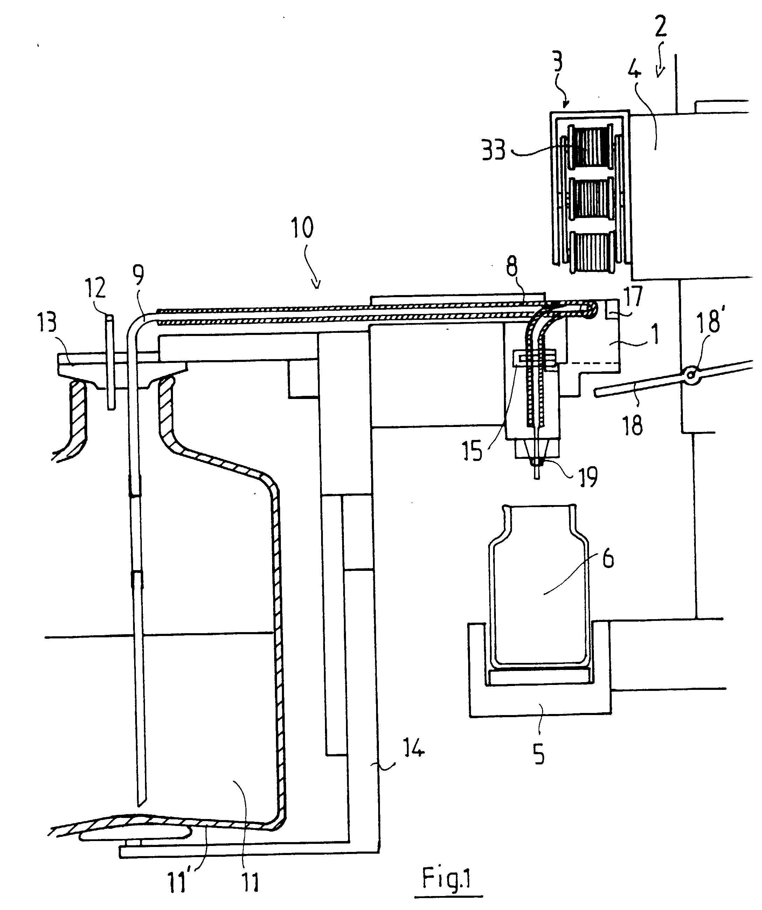

Si on se réfère à la figure 1, on voit qu'un bloc de pompage 10 du dispositif selon l'invention comprend un corps de pompe péristaltique 1 susceptible d'être accouplé à un ensemble mobile 2 comportant un rotor à galets 3 équipé de quatre galets à gorge 33, entraîné en rotation par un moteur 4, et un dispositif récepteur 5 destiné à maintenir le flacon récepteur 6 où le mélange des produits est effectué, ce dispositif récepteur 5 incorporant un dispositif de pesée (non représenté sur la figure) permettant de contrôler la quantité de liquide 11 introduite dans le flacon 6.

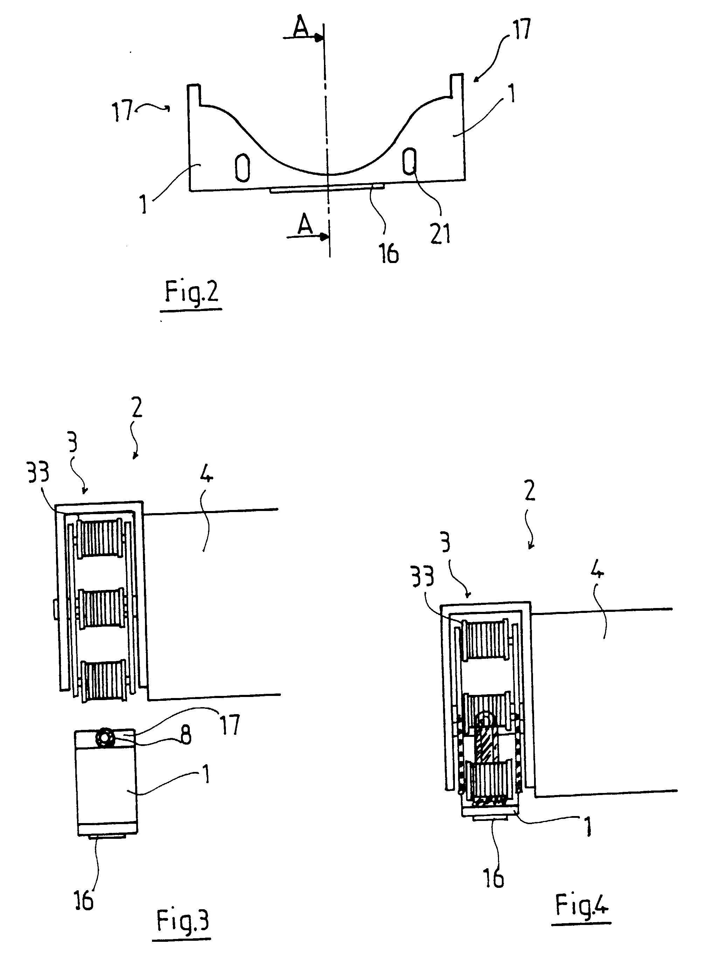

Le corps de pompe 1 est constitué de deux parties réunies par une lame de ressort 16 (visible sur la figure 2) et il incorpore un tuyau à écrasement 8 qui débouche à une partie latérale du corps de pompe 1 par un guide 17 et qui se prolonge, à l'intérieur du corps de pompe 1, par un bec verseur 19 débouchant à sa partie inférieure, le tuyau 8 se raccordant d'autre part à l'extérieur à un tube 9 qui plonge à travers un bouchon 13 dans un flacon 11' contenant le liquide 11 à prélever et maintenu dans un porte-flacon 14 incorporant le bouchon 13. Un tube court 12 passé à travers le bouchon 13 maintient le liquide 11 à la pression ambiante, tandis qu'une pince 15 permet de fermer le tuyau 8 après le prélèvement, la pince 15 s'effaçant mécaniquement dès l'accouplement du rotor 3 au corps de pompe 1.

Un levier 18 monté pivotant sur l'ensemble mobile 2 autour d'un axe 18' vient s'appliquer sur la base du corps de pompe 1 pendant l'opération d'accouplement du rotor 3, de manière à faciliter l'approche et le positionnement de ce dernier.

Si on se réfère aux figures 2, 3 et 4, on voit sur ces figures le corps de pompe 1 de la pompe péristaltique formé de deux parties réunies par une lame de ressort 16, fixé au support 14 au moyen de vis passant par deux orifices 21 et renfermant le tuyau 8 disposé dans deux guides circulaires 17.

Le tuyau 8 débouche du corps de pompe 1 par un guide 17 disposé sur le côté dudit corps de pompe et le liquide 11 prélevé s'écoule dans le flacon récepteur 6 à travers le bec verseur 19.

Les galets 33 régulièrement espacés sur le rotor 3 permettent de créer un mouvement péristaltique dans le tuyau 8, autorisant ainsi le pompage séquentiel de petites quantités de liquide 11 dans le flacon 11', le réglage du moteur 4 permettant de ralentir ou d'accélérer la rotation du rotor 3, et donc le prélèvement du liquide 11.

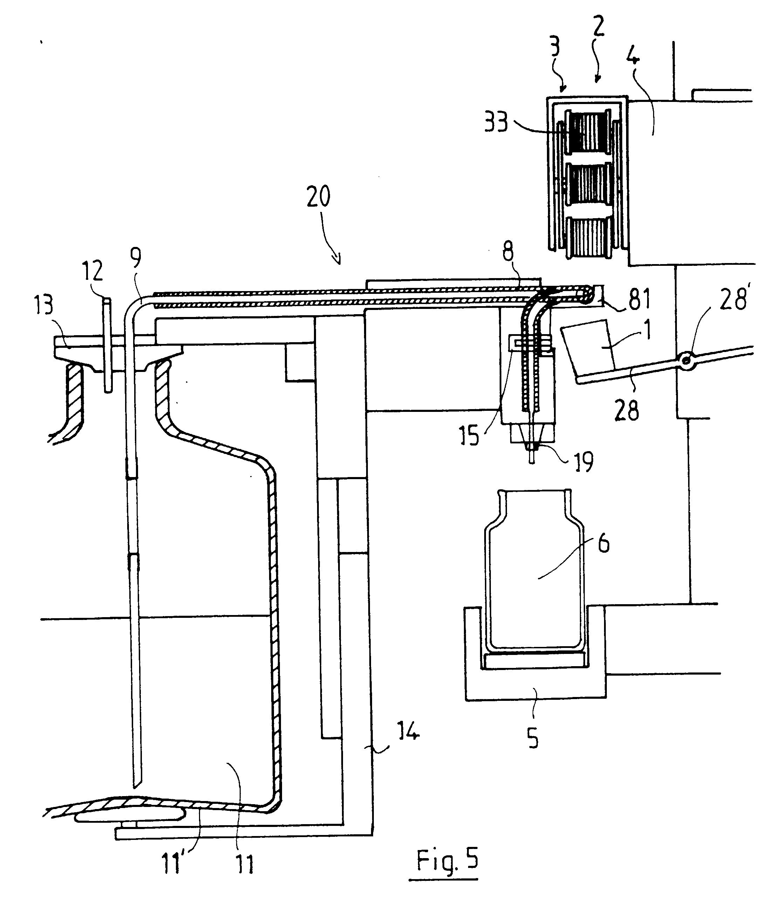

Si on se réfère à la figure 5, on voit que dans ce mode de réalisation le corps de pompe 1 est solidarisé à l'ensemble mobile 2 par l'intermédiaire d'un bras articulé 28 monté pivotant autour d'un axe 28', tandis que le tuyau 8 est monté sur un support 81 susceptible d'être accouplé à l'ensemble mobile 2, et ouvert à cet effet à ses extrémités supérieure et inférieure.

Dans ce mode de réalisation, le bloc de pompage 20 comprend le tuyau 8 monté sur son support 81 et les mêmes éléments que dans le premier mode de réalisation représenté à la figure 1, à savoir le flacon 11' contenant le liquide 11 à prélever, maintenu dans un porte-flacon 14 et muni d'un bouchon percé 13 à travers lequel passent un tube court 12, un tube 9 plongeant dans le liquide 11 et raccordé au tube 8, lequel est prolongé, à l'intérieur du bloc de pompage 20, par un bec verseur 19 en-dessous duquel vient se positionner le flacon récepteur 6 disposé sur le dispositif récepteur 5 solidaire de l'ensemble mobile 2.

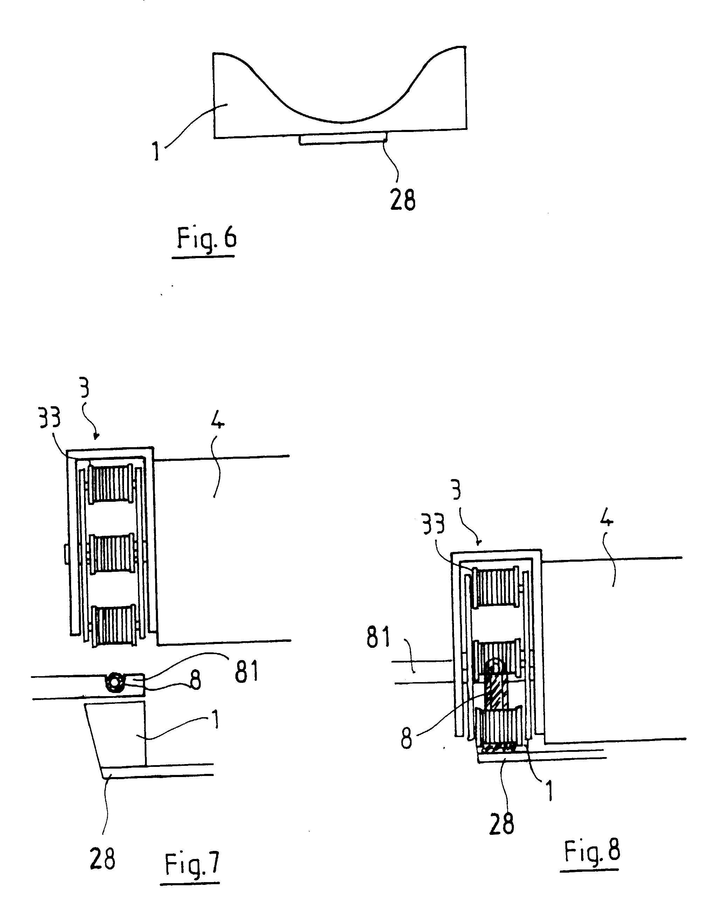

Si on se réfère aux figures 6, 7 et 8, on retrouve sur ces figures le corps de pompe 1 solidaire du bras articulé 28, le tuyau 8 sur son support 81, et le rotor 3 avec ses galets 33, solidarisé au moteur 4.

Les tuyaux à écrasement des blocs de pompage du dispositif selon l'invention doivent être choisis pour présenter une bonne résistance à l'éthanol et à certains liquides corrosifs, et ils sont de préférence réalisés en une matière plastique souple aux propriétés proches du PTFE.

Le corps de pompe est de préférence réalisé en alliage d'aluminium pour des raisons de légèreté et de rigidité, ainsi que de facilité d'usinage. Certaines matières plastiques peuvent être également utilisées sous réserve de leur bonne tenue aux solvants et aux vapeurs éthyliques contenus dans les produits manipulés.

Le dispositif selon l'invention est particulièrement adapté au mélange automatisé de liquides susceptibles d'être corrosifs, de qualité et de viscosité variables et d'origines diverses, et répond aux principes édictés par un cahier des charges précis, notamment pour ce qui concerne la nécessité d'observer une non-contamination stricte, tant par les produits voisins devant être manipulés, que par les agents de fabrication contenus dans les produits utilisés.

Le dispositif selon l'invention est particulièrement destiné aux industries de la parfumerie, de la cosmétologie, de la para-pharmacie et de la pharmacochimie, mais peut être également utilisé dans le domaine des produits aromatiques alimentaires, et être mis en oeuvre par les laboratoires désirant automatiser leurs fabrications.

## Revendications

1. Dispositif permettant de prélever, peser et mélanger automatiquement des liquides divers et coûteux (11) disposés dans des flacons (11'), comprenant une multiplicité de blocs de pompage (10, 20) actionnés par une pompe péristaltique en deux parties, la première constituée d'un corps de pompe (1) destiné à accueillir un tuyau (8) à écrasement et la seconde constituée d'un rotor (3) entraîné par un moteur (4) solidaire d'un ensemble mobile (2) auquel est également solidarisé un dispositif récepteur (5) porteur d'un flacon récepteur (6) destiné à recevoir les liquides (11) prélevés successivement, ledit dispositif récepteur (5) incorporant un dispositif de pesée permettant de contrôler la quantité de liquide (11) introduite dans le flacon (6), chaque bloc de pompage (10, 20) étant ouvert sur le dessus pour recevoir le rotor (3) en vue de l'accouplement de l'ensemble mobile (2) au corps de pompe (1).

2. Dispositif selon la revendication 1, caractérisé en ce que le corps de pompe (1) est solidaire du bloc de pompage (10) et incorpore le tuyau (8).

3. Dispositif selon la revendication 2, caractérisé en ce que chaque corps de pompe (1) est formé de deux parties réunies par un moyen élastique (16).

4. Dispositif selon la revendication 1, caractérisé en ce que le corps de pompe (1) est solidaire de l'ensemble mobile (2) auquel il est relié par l'intermédiaire d'un bras articulé (28) monté pivotant autour d'un axe (28'), le tuyau (8) étant monté sur un support (81) ouvert par le dessous pour permettre l'introduction dudit corps de pompe (1).

5. Dispositif selon l'une quelconque des revendications précédentes, caractérisé en ce qu'une pince (15) ferme le tuyau (8) après le prélèvement du liquide (11), ladite pince (15) étant adaptée à s'effacer mécaniquement dès l'introduction du rotor (3) dans le corps de pompe (1).

6. Dispositif selon l'une quelconque des revendications précédentes, caractérisé en ce que le rotor (3) comporte de trois à six galets cylindriques (33), avec ou sans gorge.

## Patentansprüche

1. Vorrichtung zum automatischen Entnehmen, Wiegen und Mischen von verschiedenen kostbaren Flüssigkeiten (11), die in Flakons (11') enthalten sind, umfassend eine Mehrzahl von Pumpenblocks (10), (20), die von einer peristaltischen, zweiteiligen Pumpe betätigt sind, deren erster Teil aus einem Pumpengehäuse (1) zum Anschließen eines Quetschschlauches 8, und deren zweite aus einem Rotor 3 besteht, der angetrieben ist von einem Motor 4, der Bestandteil einer mobilen Einheit ist, die gleichzeitig mit einer Aufnahme- und Tragvorrichtung (5) eines Aufnahmeflakons (6) fest verbunden ist zum Aufnehmen von aufeinanderfolgend entnommenen Flüssigkeiten (11), wobei die Aufnahmevorrichtung (5) eine Wiegevorrichtung zum Steuern der in den Flakon (6) eingefüllten Flüssigkeitsmenge (11) aufweist, wobei jeder Pumpensatz (10), (20) an seiner Oberseite offen ist zur Aufnahme des Rotors (3) im Hinblick auf das Ankuppeln der mobilen Einheit an das Pumpengehäuse (1).

2. Vorrichtung nach Anspruch 1, dadurch gekennzeichnet, daß das Pumpengehäuse einteilig mit dem Pumpenblock (10) ist und den Schlauch (8) beinhaltet.

3. Vorrichtung nach Anspruch 2, dadurch gekennzeichnet, daß jeder Pumpenblock (1) aus zwei Teilen gebildet ist, die durch ein elastisches Mittel (16) miteinander verbunden sind.

4. Vorrichtung nach Anspruch 1, dadurch gekennzeichnet, daß das Pumpengehäuse (1) fest verbunden ist mit der mobilen Einheit (2), mittels eines Gelenkarmes (28), der um eine Achse (28') schwenkbar gelagert ist, und daß der Schlauch (8) auf einem Träger (81) montiert ist, der nach unten offen ist, um das Einführen des Pumpengehäuses (1) zu ermöglichen.

5. Vorrichtung nach einem der vorausgegangenen Ansprüche, dadurch gekennzeichnet, daß ein Quetschhahn (15) den Schlauch (8) nach dem Entfernen der Flüssigkeit (11) absperrt, und daß der Quetschhahn (15) derart gestaltet ist, daß er mechanisch aufgehoben wird nach der Einführung des Rotors (3) in das Pumpengehäuse (1).

6. Vorrichtung nach einem der vorausgegangenen Ansprüche, dadurch gekennzeichnet, daß der Rotor (3) drei bis sechs zylindrische Rollen (33) mit oder ohne Einkerbung aufweist.

## Claims

1. Device allowing sundry and expensive liquids (11) kept in bottles (11') to be automatically tapped, weighed and mixed, comprising a number of pumping units (10, 20) activated by a two part peristaltic pump, the first part made up of a pump body (1) designed to take a collapsible hose (8) and the second made up of a rotor (3) driven by a motor (4) which is integral with a movable unit (2) with which a receiving device (5) which carries a receiving flask (6) designed to successively take the tapped liquids (11), whereby the said receiving device (5) incorporates a weighing device enabling the quantity of liquid (11) entering the flask (6) to be checked, each pumping unit (10, 20) being open at the top to take the rotor (3) for the purposes of attaching the movable unit (2) to the pump body (1).

2. Device according to claim 1, characterised in that the pump body (1) is integral with the pumping unit (10) and incorporates the hose (8).

3. Device according to claim 2, characterised in that each pump body (1) is made up of two parts joined by a resilient means (16).

4. Device according to claim 1, characterised in that the pump body (1) is integral with the movable unit (2) to which it is attached via an articulated arm (28) mounted so that it pivots around an axis (28'), the hose (8) being fitted on a support (81) which is open at the bottom to allow the said pump body (1) to be introduced.

5. Device according to any one of the previous claims, characterised in that a clamp (15) closes the hose (8) after the liquid (11) has been tapped, the said clamp (15) being made to move aside mechanically as soon as the rotor (3) is introduced into the pump body (1).

6. Device according to any one of the previous claims, characterised in that the rotor (3) comprises from three to six cylindrical rollers (33), with or without a neck.
